# EUROPEAN PATENT APPLICATION

(11) **EP 2 312 181 A1**
(43) Date of publication of application: **20.04.2011**
(21) Application number: 09802696.6
(22) Date of filing: 28.07.2009
(51) Int. Cl.: F16F 15/12, B60K 17/22, F16F 15/126

(54) **DYNAMIC DAMPER**

(30) Priority: 28.07.2008 JP 2008193071
(71) Applicant: Keeper Co., Ltd., Kanagawa 251-8515 (JP)
(72) Inventor: AKACHI, Yunosuke, Fujisawa-shi Kanagawa 251-8515 (JP)
(74) Representative: Henkel, Feiler & Hänzel
(86) International application number: PCT/JP2009/003550
(87) International publication number: WO 2010/013447

(57) **Abstract**

A dynamic damper which is reduced in weight and size without impairing the performance of the dynamic damper. A dynamic damper (1) comprising a mass member (2) having an inner diameter greater than the outer diameter of a rotating shaft (5) and surrounding the outer periphery of the rotating shaft (5), a holding section (3) located on the inner periphery of the mass member (2) and held by the rotating shaft (5), and elastic sections (4) provided at equal intervals in the circumferential direction and interconnecting the holding section (3) and the mass member (2) to support the mass member (2). The elastic sections (4) are provided tilted in the same direction relative to a line (6) normal to the mass member (2) or the rotating shaft (5).

## Description

### TECHNICAL FIELD

The present invention relates to a dynamic damper which is attached around a rotating shaft such as a drive shaft of an automobile to suppress harmful vibration occurring at the rotating shaft.

### BACKGROUND ART

A dynamic damper is widely used to suppress harmful vibration which is essentially not desired to occur such as bending vibration and torsional vibration due to rotational imbalance generated in accordance with rotation of a rotating shaft such as a drive shaft and a propeller shaft for an automobile and the like. Such a dynamic damper performs the function by absorbing vibration energy of the rotating shaft to convert into vibration energy of the dynamic damper with resonance as attuning character frequency (it is also called natural frequency) to dominant frequency of excited harmful vibration.

In the conventional art, there has been a dynamic damper which includes a fixing member held by a rotating shaft, a cylindrical mass member arranged at an outer periphery of the fixing member, and an elastic member to couple the fixing member and the mass member in the radial direction. Here, load is received by compression and tension of the elastic member against vibration in the radial direction of the mass member (see Patent document 1).

Further, a dynamic damper of another type includes a pair of ring-shaped fixing members supported by a rotating shaft having a predetermined distance in the axial direction, a cylindrical mass member having an inner periphery larger than an outer periphery of the rotating shaft and arranged between the pair of fixing members, and a pair of elastic members to integrally couple each fixing member and each axial end part of the mass member adjacent to the fixing member. Here, ring-shaped space to enable displacement in the radial direction of the mass member is defined between the inner periphery of the mass member and the outer periphery of the rotating shaft, and then, the fixing members, the elastic members and the mass member are arranged coaxially in the axial direction, so that vibration of the mass member is suppressed by displacement in the shearing direction of the pair of elastic members (see Patent document 2).

Further, a dynamic damper of another type of which dominant spring constant of an elastic member is a shearing spring constant includes a plurality of elastic members provided at equal intervals in the circumferential direction and supporting the mass member, each elastic member being stepladder-shaped constituted with two beams tilted in the opposite direction each other (see Patent document 3). The dynamic damper includes a cylindrical mass member coaxially arranged as being apart by a predetermined distance from an outer periphery of the rotating shaft, six pairs of stepladder-shaped elastic members to support the mass member by being contacted to the outer periphery of the rotating shaft as one end being integrally connected to an inner periphery of the mass member and the other end being extended in the direction toward the center, and a ring-shaped fixing member formed as being connected to one end in the axial direction of the elastic member. Then, vibration of the mass member is suppressed with deformation in the radial direction of the stepladder-shaped elastic members having two beams arranged symmetrically against a normal line.

Patent document 1: Japanese Patent Application Laid-Open No. 9-229137
Patent document 2: Japanese Examined Patent Application No. 6-37915
Patent document 3: Japanese Examined Patent Application No. 6-94892

### DISCLOSURE OF THE INVENTION

### PROBLEMS TO BE SOLVED BY THE INVENTION

However, in the dynamic damper of the type described in the above Patent document 1, since the mass member is supported by the elastic member in the compression direction, there has been a problem that the elastic member becomes thin in the radial direction and the compression spring constant becomes large when trying to lessen the outer diameter of the dynamic damper. Consequently, character frequency of the dynamic damper becomes large, so that predetermined character frequency cannot be obtained. Meanwhile, in the case that the character frequency is maintained at a low value by enlarging mass of the mass member, influence of relative decreasing of the stiffness in the torsion direction against the stiffness in the compressing direction becomes not negligible in addition to a problem of weight increase. Thus, with the dynamic damper in the conventional art, downsizing and lightening are significant issues since lessening of the outer diameter is extremely difficult.

Further, in the dynamic damper described in Patent document 2 being the type to arrange the fixing members, the mass member and the elastic members as being deviated mutually in the axial direction so as not to overlap in the radial direction, there has been a problem of being prolonged direction due to arrangement in the axial direction in the order of a fixing member, an elastic member, the mass member, an elastic member, and a fixing member. In addition, the elastic members are formed to be respectively a tilted conical shape in order to couple the respective fixing members and the mass member having different diameters and support the mass member as being arranged tilted in the mutually opposite directions as sandwiching the mass member in the axial direction. Accordingly, there has been a problem that downsizing is difficult due to the stiffness increased by the amount.

Further, in the dynamic damper described in Patent document 3 utilizing a spring constant in the shearing direction, since the elastic member is formed by combining two beams to be stepladder-shaped in opposite directions, the stiffness is increased by the amount. Accordingly, there has been a problem that downsizing is difficult. In addition, in a dynamic damper having the stepladder-shaped elastic member separated in the circumferential direction, operation of fitting and fixing to the rotating shaft is troublesome.

As described above, in a dynamic damper in the conventional art, downsizing and lightening thereof have been a significant issue since it is difficult to lessen the outer diameter while maintaining performance.

Hence, the present invention provides a light and compact dynamic damper while maintaining performance as the dynamic damper.

### MEANS TO SOLVE THE INVENTION

In order to address the above issues, the present invention provides a dynamic damper which includes a mass member having an inner diameter larger than an outer diameter of a rotating shaft and surrounding an outer periphery of the rotating shaft, a holding section located on an inner periphery of the mass member and held by the rotating shaft, and a plurality of elastic sections provided at equal intervals in the circumferential direction and interconnecting the hold section and the mass member to support the mass member. Then, the elastic sections are provided tilted in the same direction relative to a normal line to the mass member or the rotating shaft.

With the dynamic damper of the present invention, since every elastic member is tilted in the same direction even though the mass member, the elastic sections and holding section are coaxially arranged as overlapping in the radial direction, the stiffness in the radial direction becomes low and the spring constant becomes extremely small to be constituted mainly with a shearing spring constant.

Here, it is preferable that the tilted angle θ is set to satisfy 20°≤θ≤50°, as θ denotes the tilted angle of a center part of the elastic section (i.e., the angle between the center line of the elastic section and a normal line at a position of the outer periphery of the holding section to which the center line contacts.

Further, height in the radial direction of a space formed between the holding section and the mass member is preferably set to be between 1.5 mm and 5 mm.

Further, it is preferable that the holding section is formed to be continuously circular and is fixed to the rotating shaft as being fitted thereto having interference against the rotating shaft.

Further, the elastic sections are preferably formed of linear beams having even thickness.

Further, it is possible that the elastic section is nonlinearly-shaped such as being arc-shaped, being S-shaped, or being step-shaped and length of the elastic sections is prolonged without changing height in the radial direction of a space formed between the holding section and the mass member.

Further, it is possible that the elastic sections are constituted with two types of beams of which at least any one of the tilted angle θ, thickness and shape is different each other and the two types of beams are alternately arranged.

Further, it is possible that the elastic section is a beam of uneven thickness having larger or smaller thickness at one of a side contacting to the holding section and a side contacting to the mass member than that at the other side.

### EFFECTS OF THE INVENTION

With the dynamic damper according to a first aspect, since the elastic sections are tilted in the same direction against a normal line of the mass member or the rotating shaft, the spring constant can be set to be extremely small as being constituted mainly with a shearing spring constant. In addition, since the tilted direction of the elastic sections is the same, the elastic sections are easy to be deformed (i.e., being low stiffness) against shaft vibration and the spring constant thereof can be further lessened. Accordingly, since the character frequency can be lowered, both of downsizing by lessening the outer diameter of the dynamic damper and lightening by lessening mass of the mass member can be achieved. That is, the mass and size, especially the outer diameter dimension, can be lessened while maintaining specific performance as a dynamic damper. In addition, since the elastic sections, the mass member and the holding section are arranged to overlap, downsizing can be achieved even comparing to a case of arranging in the axial direction.

With the dynamic damper according to a second aspect, by setting the tilted angle θ of the elastic sections to satisfy 20°≤θ≤50°, the spring constant can be set further small. Here, in case of θ<20°, an effect of reducing the spring constant is small and downsizing cannot be achieved. In case of 50°<θ, manufacturing becomes extremely difficult in consideration of thickness of the elastic sections.

With the dynamic damper according to a third aspect, by setting the height h in the radial direction of the space formed between the holding section and the mass member within a range of 1.5 mm to 5 mm, manufacturing is facilitated while enabling to lessen the spring constant as deformation in the shearing direction becomes dominant. Here, when the height h in the radial direction of the space is lower than 1. 5 mm, productivity is extremely decreased since the die strength becomes low due to being too thin of the die for forming the space. On the other hand, when the height h in the radial direction of the space is higher than 5 mm, downsizing cannot be achieved since the whole size of the dynamic damper becomes too large with respect to a small effect of spring constant reduction or fitting force becomes controversial as the thickness of the holding section becomes small.

With the dynamic damper according to a fourth aspect, since the holding section is formed to be continuously circular, sufficient fitting force can be obtained against the shaft. In addition, since the holding section is located at the inner periphery of the mass member, downsizing in the axial direction can be achieved.

With the dynamic damper according to a fifth aspect, since concentration of stress and local deformation do not occur so often with the elastic sections constituted with linear beams having even thickness, harmful vibration can be stably suppressed over a long duration.

With the dynamic damper according to a sixth aspect, the elastic sections configured to be nonlinearly-shaped such as being arc-shaped, being S-shaped, or being step-shaped enables to further reduce the spring constant by prolonging the elastic sections without varying the height in the radial direction of the space formed between the holding section and the mass member. That is, further lightening (i.e., weight reduction) and downsizing of the dynamic damper can be achieved.

With the dynamic damper according to a seventh aspect, since the elastic sections are constituted with two types of beams of which at least any one of the tilted angle θ, thickness and shape is different each other and the two types of beams are alternately arranged, vibration suppressing characteristics can be varied.

With the dynamic damper according to an eighth aspect, the fitting force with a rotating shaft can be increased as the stiffness of the holding section is increased by thickening the elastic section at the side contacting to the holding section. In addition, the coupling force with a mass member can be increased when thickening the side contacting to the mass member.

### BRIEF DESCRIPTION OF THE DRAWINGS

FIG. 1 is a front view of an embodiment of a dynamic damper of the present invention.
FIG. 2 is a sectional view along line II-II of FIG. 1.
FIG. 3 is an explanatory view illustrating a state that the dynamic damper of FIG. 1 is mounted on a rotating shaft as the configuration of the dynamic damper being illustrated with imaginary lines.
FIG. 4 is a front view illustrating another embodiment of a dynamic damper of the present invention.
FIG. 5 is an explanatory view illustrating a state that the dynamic damper of FIG. 4 is mounted on a rotating shaft.
FIG. 6 includes views further illustrating another embodiment of a dynamic damper of the present invention, as FIG. 6A being a front view and FIG. 6B being a sectional view along line VI-VI.
FIG. 7 includes views illustrating configuration of a dynamic damper of a comparative example, as FIG. 7A being a center longitudinal sectional view and FIG. 7B being a lateral sectional view along line VII-VII.
FIG. 8 is a graph showing a simulation result of variation at ratio of the spring constant against variation of space height in the radial direction as having a case that space of 3 mm in the radial direction as a reference (i.e., 100%) by utilizing software of the finite element method.
FIG. 9 is a graph showing a simulation result of variation of ratio of the spring constant against variation of elastic section tilted angle as having a case when the tilted angle is 0° as a reference (i..e., 100%) by utilizing software of the finite element method.
FIG. 10 includes front views illustrating embodiments of the elastic section formed of a nonlinearly-shaped beam of the dynamic damper of the present invention, as FIG. 10A being with an arc-shaped, FIG. 10B being with an arc-shaped, FIG. 10C being with an S-shaped and FIG. 10D being with a step-shaped.
FIG. 11 includes front views illustrating another embodiment of an elastic section of the dynamic damper of the present invention, as FIG. 11A showing an example in which a linearly-shaped beam is thickened at the side contacting to the holding section and FIG. 11B showing an example in which a linearly-shaped beam is thickened at the side contacting to the mass member.
FIG. 12 is a front view illustrating another embodiment of elastic sections of the dynamic damper of the present invention with an example that beam angles of the elastic sections are set alternately to 50° and 30°.

### BEST MODE FOR CARRYING OUT THE INVENTION

In the following, a configuration of the present invention will be described in detail based on embodiments illustrated in the drawings.

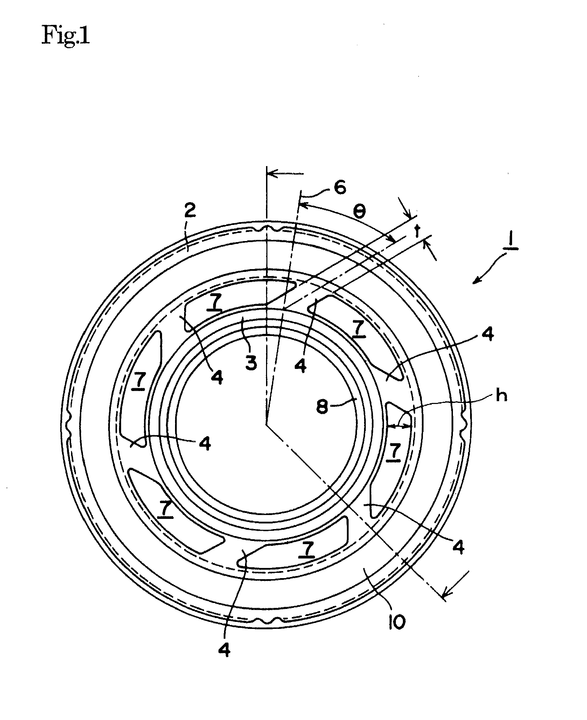

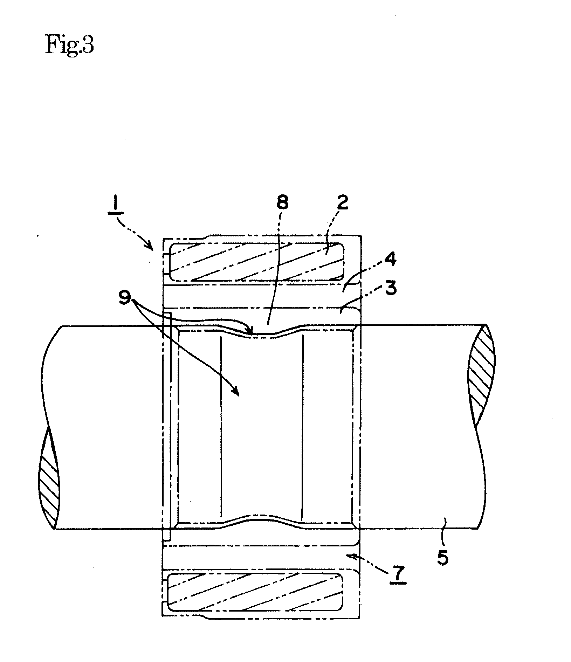

FIGS. 1 to 5 illustrate an embodiment of a dynamic damper of the present invention. A dynamic damper 1 includes a mass member (it is also called weight body) 2 having an inner diameter larger than an outer diameter of a rotating shaft 5 and surrounding the outer periphery of the rotating shaft 5, a holding section 3 located on an inner periphery of the mass member 2 and held by the rotating shaft 5, and elastic sections 4 provided at equal intervals in the circumferential direction and interconnecting the hold section 3 and the mass member 2 to support the mass member 2. Then, the elastic sections 4 are provided tilted in the same direction relative to a normal line 6 of the mass member 2 or the rotating shaft 5.

Here, the tilted angle θ of the elastic sections 4 is preferably set to satisfy 20°≤θ≤50°. Note that the tilted angle θ denotes the angle against the respective normal lines 6 of the mass member 2 or the rotating shaft 5, for example, being the tilted angle of a center part of the elastic section 4, that is, the angle between the center line of the elastic section 4 and the normal line 6 at a position of the outer periphery of the holding section 3 to which the center line contacts. In the present embodiment, when the tilted angle θ is smaller than 20°, an effect of reducing a spring constant is small and downsizing cannot be achieved. On the other hand, when the tilted angle θ is larger than 50°, manufacturing becomes extremely difficult in consideration of the thickness t of the elastic sections 4. Accordingly, by setting the tilted angle θ of the elastic sections to satisfy 20°≤θ≤50°, the elastic sections 4 having a smaller spring constant can be easily manufactured.

Further, the height h in the radial direction of a space 7 formed between the holding section 3 and the mass member 2 is preferably set to be between 1.5 mm and 5 mm. When the height h in the radial direction is lower than 1.5 mm, productivity is extremely decreased since the die strength becomes low due to being too thin of the die for forming the space 7. On the other hand, when the height h in the radial direction of the space 7 is higher than 5 mm, downsizing cannot be achieved since the whole size of the dynamic damper 1 becomes too large with respect to a small effect of spring constant reduction. In addition, the thickness of the holding section 3 becomes small to cause a problem that fitting force when being fixed to the rotating shaft 5 becomes insufficient. Accordingly, by setting the height h in the radial direction of the space 7 within a range of 1.5 mm to 5 mm, it is possible to obtain the holding section 3 having a sufficient thickness with a lessened spring constant.

Farther, the holding section 3 formed of rubber material such as synthetic rubber (e.g., ethylene-propylene rubber (EPDM)) and natural rubber to be a continuously circular shape (i.e., a cylindrical shape). The holding section 3 has interference against the rotating shaft 5 to be a fixing portion to the rotating shaft 5. That is, the holding section 3 is arranged to be fitted to the rotating shaft 5 with interference. The inner diameter of the holding section 3 is formed as being slightly smaller than the outer diameter of the rotating shaft 5 and has a fitting portion 8 formed of trapezoidal protrusion protruding inward at the center part in the axial direction to have smaller diameter. Accordingly, sufficient fitting force is obtained against the rotating shaft 5. Further, since the holding section 3 is located at the inner side of the mass member 2, the holding section 3 does not extend off in the axial direction and downsizing in the axial direction can be achieved. In addition, the dynamic damper can be easily attachable without using a component such as a clamping band. Here, the vicinity of opening portions at both ends of the holding section is thoughtfully chamfered for easy insertion of the rotating shaft.

Then, it is preferable that an attaching portion of the rotating shaft 5 being a counterpart for fixing is formed to be a shape corresponding to the fitting portion 8, that is, to be a circular portion of a slightly concave portion 9. In this case, an effect of fixing, particularly in the axial direction, is enhanced, so that the dynamic damper 1 becomes resistant to moving in the axial direction as well.

The mass member 2 is a metal-made mass member such as a cylindrical thick steel pipe and is assembled and arranged coaxially with the rotating shaft 5 at the outside of the rotating shaft 5. In the present embodiment, the periphery of the metal pipe is coated by rubber material such as synthetic rubber (e.g., ethylene-propylene rubber) and natural rubber with a minimum thickness (for example, a thickness of a degree of 1 mm) to be integrated with the elastic sections 4 and the holding section 3.

As illustrated in FIG. 1, the elastic sections 4 are provided at the inner periphery of the mass member 2 as being arranged at equal intervals in the circumferential direction. The mass member 2 is supported via the elastic section 4. Each elastic section 4 is formed of rubber material such as synthetic rubber (e.g., ethylene-propylene rubber) and natural rubber, as one end thereof being integrally connected respectively to the inner periphery of the mass member 2 and the other end being integrally connected respectively to the outer periphery of the circular holding portion at the inside thereof.

The plurality of elastic sections 4 is provided as being tilted in the same direction radially against the normal lines 6. Each elastic section 4 is connected at the inner end thereof to the outer periphery of the holding portion 3 to be integrally coupled while the outer end thereof is connected to the inner periphery of the coating 10 which surrounds and supports the mass member 2. The mass member 2 is supported via the elastic sections 4 and fixing to the rotating shaft 5 is performed via the holding section 3.

Here, in the present embodiment, in order to improve mass-productivity, the respective elastic sections 4, the holding section 3 and the rubber coating of the mass member 2 are integrally formed by die vulcanization molding. However, it is also possible to integrate with bonding and the like after separately producing the respective components.

The dynamic damper 1 of the present embodiment as structured as described above is used as follows.

First, the dynamic damper 1 is mounted to the rotating shaft 5 by fitting. The inner diameter at the vicinity of the mouth at both ends of the holding section 3 is smaller than the outer diameter of the rotating shaft 5. However, as being smaller of a slight extent, the cylindrical holding section 3 at the vicinity of the mouth thereof is expanded with a slight force due to fitting, so that insertion of the fitting portion 8 having smaller diameter at the center in the axis direction is facilitated. Then, when the fitting portion 8 arrives at the concave portion 9 of the rotating shaft 5, the fitting portion 8 is fitted to the concave portion 9 and is fixed to the outer periphery of the rotating shaft 5 with an even clamping force in the axis direction. In this manner, the dynamic damper 1 is arranged and fixed to a predetermined position of the rotating shaft 5.

When harmful vibration is excited as the rotating shaft 5 is rotated in the above state, the mass member 2 of the dynamic damper 1 of which character frequency is attuned to the frequency of the harmful vibration is resonated. Then, due to the resonance of the mass member 2, the vibration energy of the rotating shaft 5 is absorbed and the excited harmful vibration of the rotating shaft 5 is suppressed. The character frequency is determined basically with the mass of the mass member 2 and the spring constant of the elastic sections 4. Here, when the rotating shaft 5 vibrates and the outer periphery of the rotating shaft 5 becomes partially close to or apart from the inner periphery of the mass member 2, the elastic sections 4 tilted in a certain direction of the circumferential direction against the radial direction of the dynamic damper 1 is deformed as being flexural by being pushed in the direction to further enlarge the tilted angle. As a result, in the dynamic damper 1 of the present invention, the mass member 2 is supported by the elastic sections 4 in the shearing direction not in the compressing direction, so that the spring constant is to be constituted mainly with the shearing spring constant. Being different depending on a shape thereof, the shearing spring constant is remarkably smaller than a compression-tension spring constant in value. Hence, the spring constant can be remarkably lessened. Here, it is also possible to obtain an extremely small spring constant by changing the width (i.e., the length in the axial direction) and the shape of the elastic sections 4 which receive the shearing deformation.

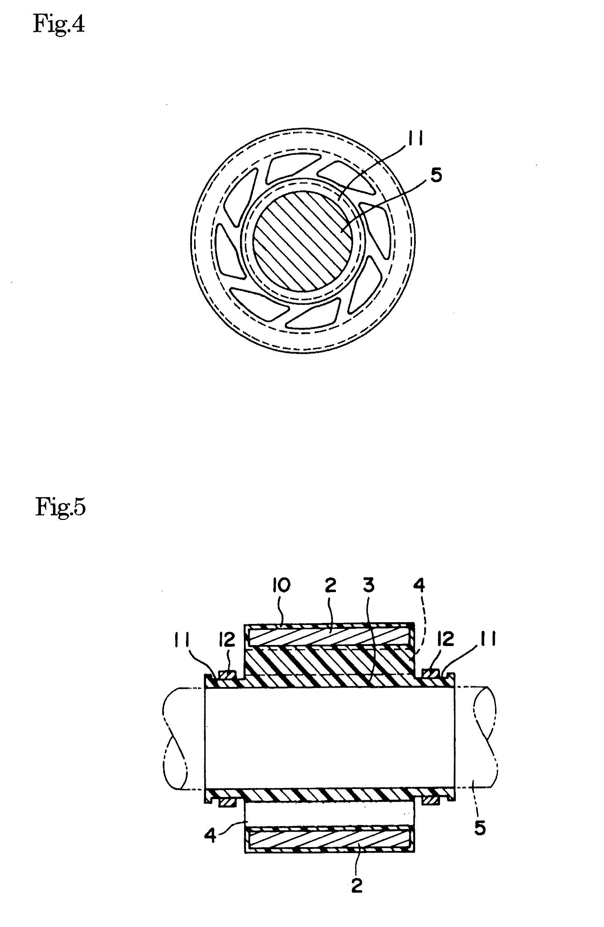

Next, another embodiment of the present invention will be described with reference to FIGS. 4 to 6. Here, in the other embodiment described in the following, the same numeral is given to the similar structural element to the above embodiment and the detail description thereof will not be repeated.

In the dynamic damper 1 of the present embodiment, band holding portions 11 to which fixing bands 12 are mounted to both ends of the holding section 3 are formed integrally therewith without having the fitting protrusion portion 8 at the center of the inner periphery of the holding section 3 for fitting. In this case, the holding section 3 is formed to be approximately the same as the outer diameter of the rotating shaft 5, so that the attaching can be easily performed. Here, the band holding portion 11 is not necessarily formed at the both ends of the holding section 3. It is also possible that only one end of the holding section 3 is provided therewith.

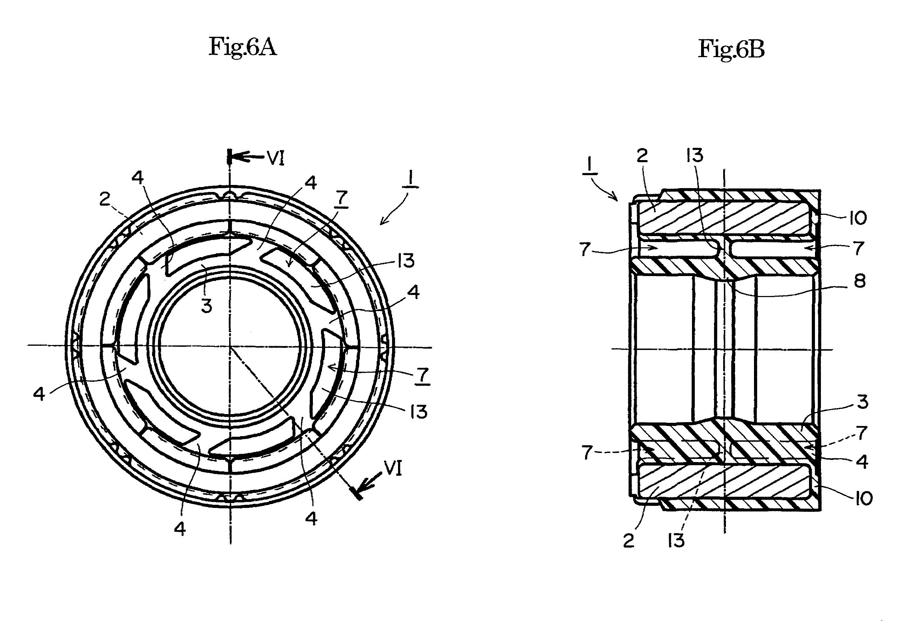

Further, the space 7 between the holding section 3 and the mass member 2 of the dynamic damper 1 of the present invention is not limited to be formed as penetrating in the axial direction. As illustrated in FIG. 6, it is also possible to form a wall 13 at some midpoint of the space 7 to segmentalize the space 7 in the axial direction. In this case, since the die can be divided into two parts, strength of the die can be increased by shortening cores of the die to form the space 7 while maintaining performance as a dynamic damper.

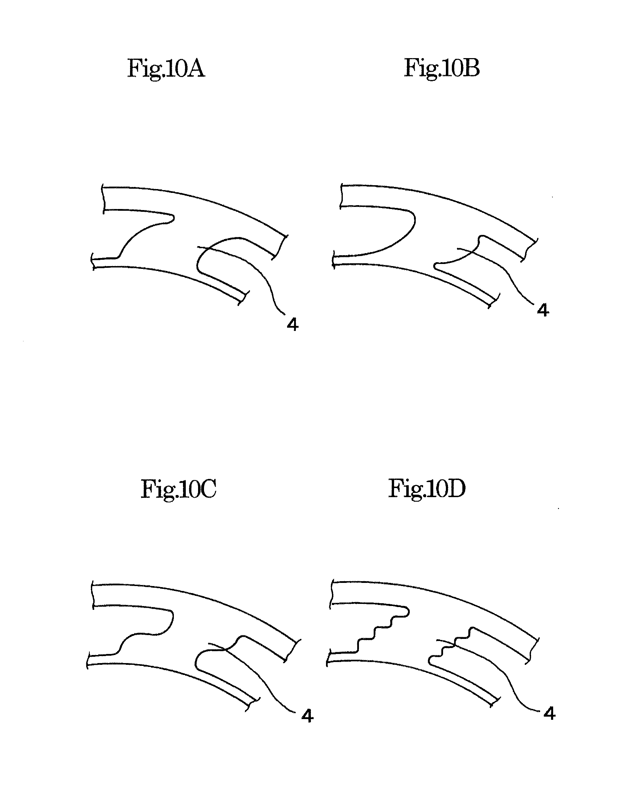

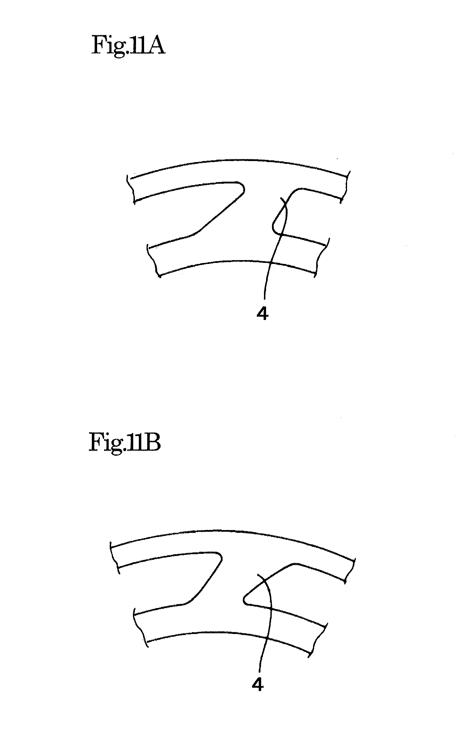

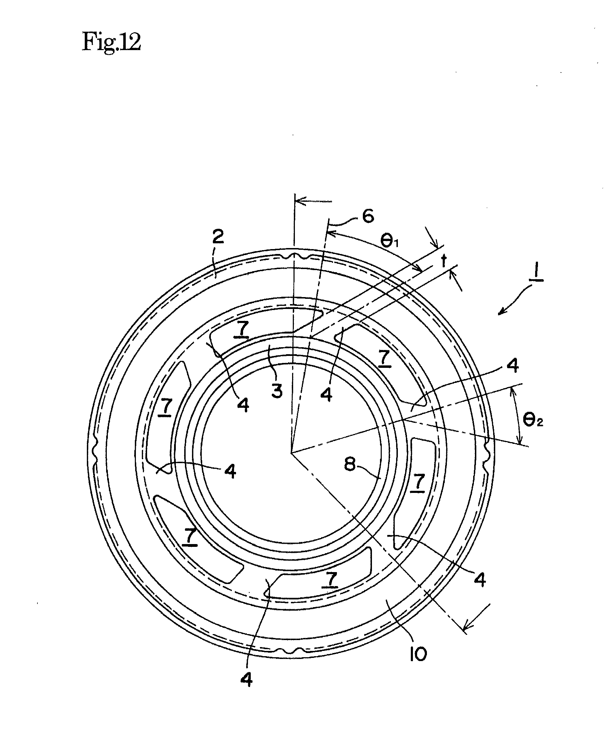

Here, the above embodiments are preferable examples of the present invention. Not being limited to the above, the present invention can be actualized with various modifications without departing from the argument of the present invention. For example, in the above description, the elastic sections 4 of the present invention are exemplified as mainly being linearly extended. However, not limited to this, the elastic sections 4 can be, for example, arc-shaped (see FIGS. 10A and 10B), S-shaped (see FIG. 10C), step-shaped (see FIG. 10D), or other nonlinearly-shaped in an axis cross-sectional shape. In this case, it is also possible to further reduce the spring constant by prolonging the elastic sections 4 without changing the height h in the radial direction of the space 7 formed between the holding section 3 and the mass member 2. Further, the thickness t of the elastic sections 4 is not necessarily uniformed. For example, when the inner side (i.e., the holding section 3 side) is thickened as illustrated in FIG. 11A, the stiffness of the holding section 3 is increased and the fitting force with the rotating shaft 5 can be increased. Further, when the outer side (i.e., the mass member 2 side) is thickened as illustrated in FIG. 11B, the coupling force with the mass member 2 can be increased. Furthermore, the respective elastic sections 4 may not be formed to be beams having the perfectly same specifications. For example, the tilted angle θ, the thickness t or the shape may be varied alternately in the circumferential direction. Thus, various characteristics can be obtained. For example, the beam angle θ of the elastic sections 4 may be alternately enlarged (to be θ₁) and lessened (to be θ₂) as illustrated in FIG. 12. Instead, not being illustrated in the drawings, it is also possible to alternately arrange the elastic section 4 of which holding section 3 side is thickened as illustrated in FIG. 11A and the elastic section 4 of which mass member 2 side is thickened as illustrated in FIG. 11B. Further, it is also possible to combine beams of various shapes of FIG. 10.

### EXAMPLES

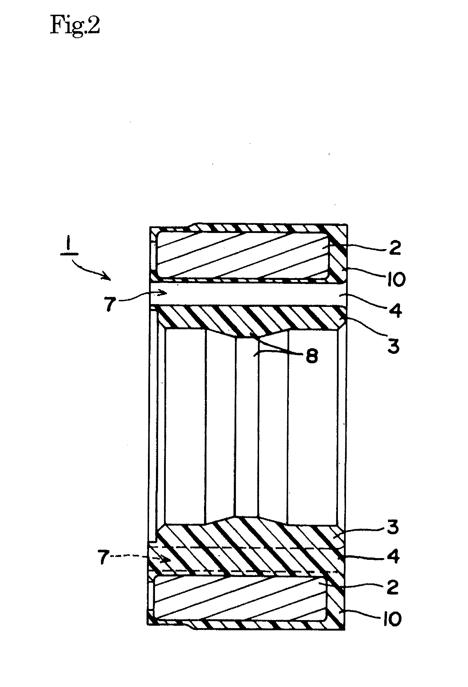

The relation between the height h in the radial direction of the space 7 and the spring constant and the relation between the elastic section tilted angle and the spring constant are analyzed on the dynamic damper of the present invention having the configuration as illustrated in FIGS. 1 and 2 with computer simulation by utilizing software of the finite element method.

Following is the assumed specifications of the dynamic damper. The outer diameter of the damper is 50 mm, the thickness of the holding section 3 is 2.5 mm, the height h in the radial direction of the space 7 is 3 mm, the thickness t of the elastic portions 4 is 3 mm, and the tilted angle θ of the elastic sections 4 is 50°. Further, EPDM of 18 g in mass is used for the material constituting the holding section 3, the elastic sections 4 and the rubber coating 10 of the mass member 2. The respective elastic sections 4, holding section 3 and the rubber coating 10 of the mass member 2 are integrally formed by die vulcanization molding. As the mass member 2, a metal ring made of S10C or S10C-equivalent is employed as the outer diameter being 49 mm, the inner diameter being 37.5 mm, the length being 22 mm, and the mass being 134 g. Then, it is assumed that six of the elastic sections 4 are provided at equal intervals in the circumferential direction. Further, the diameter of the rotating shaft 5 to which the dynamic damper 1 is fitted is assumed to be 26 mm.

### (Space)

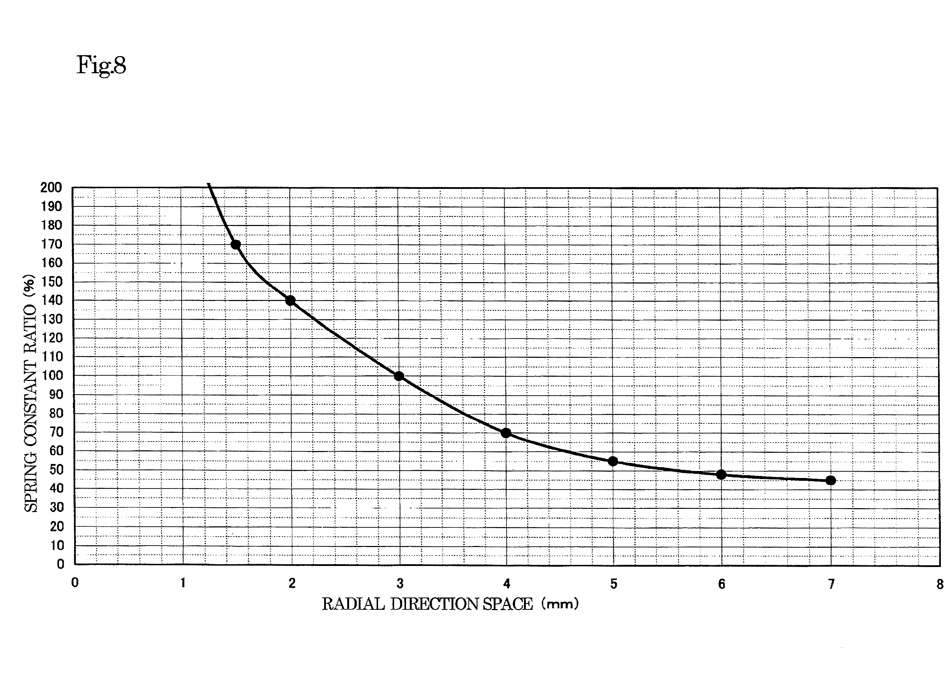

Variation of the spring constant is analyzed as varying the height h in the radial direction of the space 7. The result thereof is shown in FIG. 8 and Table 1. Here, the simulation result is indicated by the variation of ratio of the spring constant against the variation of the height h of the space 7 having the case that the height h in the radial direction of the space is 3 mm as a reference (i.e., 100%).

**[Table 1]**

| Radial direction space | 1 | 1.5 | 2 | 3 | 4 | 5 | 6 | 7 |
|---|---|---|---|---|---|---|---|---|
| Spring constant ratio (%) with reference of 3 mm | 240 | 170 | 140 | 100 | 70 | 55 | 48 | 45 |

The above test result proved that the height h in the radial direction of the space 7 is set to be within a range of 1.5 mm to 5 mm, preferably within a range of 2 to 4 mm, in order to minimize the spring constant.

### (Tilted angle of elastic section)

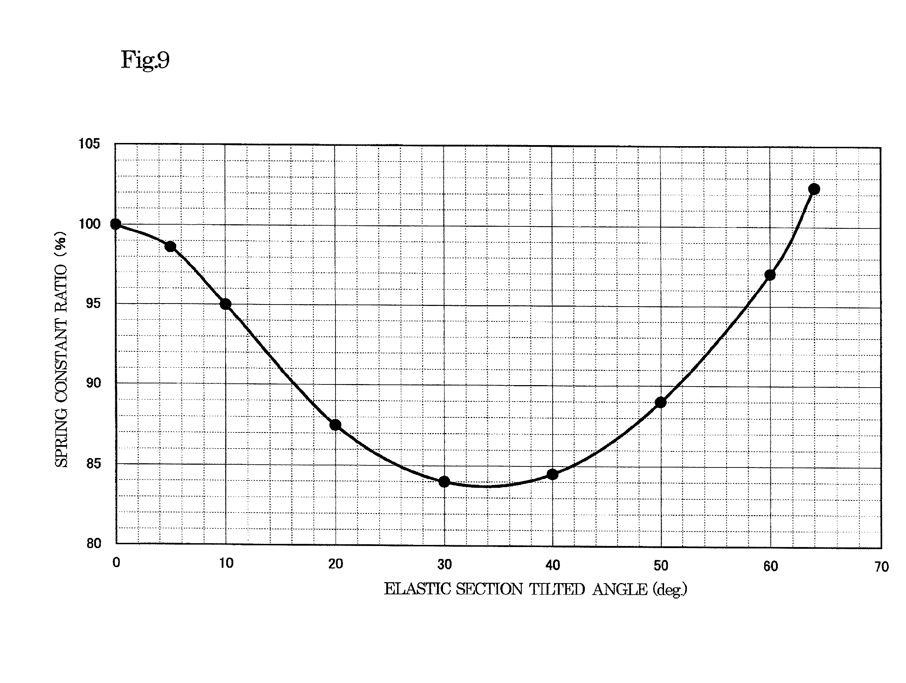

Variation of the spring constant is analyzed as varying the tilted angle θ of the elastic sections 4. The result thereof is shown in FIG. 9 and Table 2. Here, the simulation result is indicated by the Variation of ratio of the spring constant against the variation of the tilted angle θ of the elastic sections 4 having the case when the tilted angle is 0° as a reference (i.e., 100%).

**[Table 2]**

| Elastic section tilted angle(deg) | 0 | 5 | 10 | 20 | 30 | 40 | 50 | 60 | 64 |
|---|---|---|---|---|---|---|---|---|---|
| Spring constant ratio | 100.0 | 98.6 | 95.0 | 87.5 | 84.0 | 84.5 | 89.0 | 97.0 | 102.4 |

The above test result proved that the tilted angle θ of the elastic sections 4 is set to be within a range of 20° to 50°, preferably within a range of 30° to 40°, in order to minimize the spring constant.

### (Comparison with comparative example)

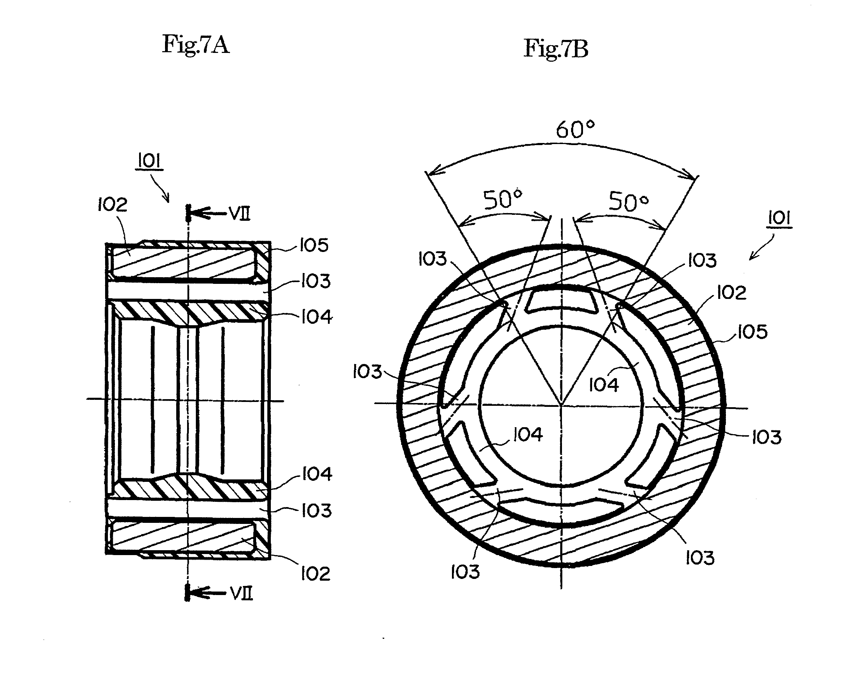

A dynamic damper 101 having a configuration as illustrated in FIG. 7 is assumed as a comparative example and is compared to the spring constant of the above dynamic damper of the present invention by utilizing the finite element method. The dynamic damper 101 of the comparative example is configured that every two beams of six elastic sections 103 are arranged to be a stepladder-shape as being opposed each other tilted in opposed directions. Here, in the drawing, numeral 102 denotes a ring-shaped mass member, numeral 104 denotes a holding section, and numeral 105 denotes a rubber coating to cover the mass member 102. Further, in both cases, specifications in this simulation are assumed that the outer diameter of the damper is 50 mm, the thickness of the holding section 3 is 2.5 mm, the length in the radial direction of the space 7 is 3 mm, the thickness t of the elastic portions 4 is 3 mm, and the tilted angle θ of the elastic sections 4 is 50°. The result indicating the spring constant of the comparative example is shown in Table 3 having the spring constant of the dynamic damper 1 of the present invention as a reference (i.e., 100%).

**[Table 3]**

| Tilted direction | Present invention | Comparative example |
|---|---|---|
| Spring constant ratio (%) with referring same direction | 100 | 115 |

Through the comparison of the spring constants, the dynamic damper of the comparative example has a value of 115 % as the spring constant of the dynamic damper of the present invention being 100%. The above proved that the dynamic damper configuration of the present invention has a small spring constant and is suitable for downsizing and lightening of a dynamic damper.

### DESCRIPTION OF REFERENCE NUMERALS

- 1: Dynamic damper
- 2: Mass member
- 3: Holding section
- 4: Elastic section
- 5: Rotating shaft
- 6: Normal line
- 7: Space formed between holding section and mass member
- h: Space height in radial direction
- θ: Tilted angle of elastic section center part
- t: Elastic section thickness

## Claims

1. A dynamic damper comprising:
a mass member having an inner diameter larger than an outer diameter of a rotating shaft and surrounding an outer periphery of the rotating shaft; a holding section located on an inner periphery of the mass member and held by the rotating shaft; and a plurality of elastic sections provided at equal intervals in the circumferential direction and interconnecting the hold section and the mass member to support the mass member; wherein the elastic sections are provided tilted in the same direction relative to a normal line to the mass member or the rotating shaft.

2. The dynamic damper according to claim 1,
wherein the tilted angle θ is set to satisfy 20°≤θ≤50°;
as θ denotes the tilted angle of a center part of the elastic section (i.e., the angle between the center line of the elastic section and a normal line at a position of an outer periphery of the holding section to which the center line contacts).

3. The dynamic damper according to claim 1, wherein height in the radial direction of a space formed between the holding section and the mass member is set to be between 1.5 mm and 5 mm.

4. The dynamic damper according to claim 1, wherein the holding section is formed to be continuously circular and is fixed to the rotating shaft as being fitted thereto having interference against the rotating shaft.

5. The dynamic damper according to claim 1, wherein the elastic sections are formed of linear beams having even thickness.

6. The dynamic damper according to claim 1, wherein the elastic section is nonlinearly-shaped such as being arc-shaped, being S-shaped, or being step-shaped and length of the elastic sections is prolonged without changing height in the radial direction of a space formed between the holding section and the mass member.

7. The dynamic damper according to claim 1, wherein the elastic sections are constituted with two types of beams of which at least any one of the tilted angle θ, thickness and shape is different each other and the two types of beams are alternately arranged.

8. The dynamic damper according to claim 1, wherein the elastic section is a beam of uneven thickness having larger or smaller thickness at one of a side contacting to the holding section and a side contacting to the mass member than that at the other side.
